# EUROPÄISCHE PATENTSCHRIFT

(11) **EP 1 542 849 B1**
(45) Veröffentlichungstag und Bekanntmachung des Hinweises auf die Patenterteilung: **16.01.2008**
(21) Anmeldenummer: 02787853.7
(22) Anmeldetag: 28.11.2002
(51) Int. Cl.: B29C 45/17, B65G 15/58

(54) **TRANSPORTTRÄGER ZUR LAGEGENAUEN TEILEZUFÜHRUNG**
TRANSPORT CARRIER FOR PRECISE-POSITIONED SUPPLY OF PARTS
TRANSPORTEUR CON U POUR ACHEMINER DES PIECES AVEC UN POSITIONNEMENT PRECIS

(30) Priorität: 25.09.2002 DE 10244498
(43) Veröffentlichungstag der Anmeldung: 22.06.2005
(73) Patentinhaber: Braun GmbH, 61476 Kronberg (DE)
(72) Erfinder: EIMECKE, Rolf, 63179 Obertshausen (DE); GEISER, Klaus, 61267 Neu-Anspach (DE); STEIN, Bernd, 61389 Schmitten (DE); VANKOV, Michael, 61389 Schmitten (DE); HÜTTER, Frank, 61352 Bad Homburg (DE); WEISS, Stephan, 61476 Kronberg (DE)
(86) Internationale Anmeldenummer: PCT/EP2002/013425
(87) Internationale Veröffentlichungsnummer: WO 2004/033181

(56) Entgegenhaltungen:
- BE-A- 1 010 464
- DE-A- 3 019 916
- DE-A- 19 614 742
- US-A- 5 813 513

## Beschreibung

Die vorliegende Erfindung betrifft einen Transportträger zur lagegenauen Teilezuführung gemäß dem Oberbegriff des Patentanspruchs 1 und ein Verfahren zur lagegenauen Teilezuführung gemäß Patentanspruch 6.

Ein Transportträger gemäß dem Oberbegriff von Anspruch 1 ist aus der DE-A-3019916 bereits bekannt.

Aus dem Stand der Technik sind Transportvorrichtungen für Kleinteile bekannt, die schlecht sortierbare Einzelteile von einer Herstelleinrichtung zu einer Weiterverarbeitungseinrichtung, wie beispielsweise einen Montageautomaten, transportieren. Hierzu werden beispielsweise aus einem Spritzgußautomaten entnommene Kunststoffkleinteile auf einen Klebestreifen plaziert und zu einer entsprechenden Weiterverarbeitungseinrichtung verbracht. Die Kunststoffkleinteile werden dann vom Transportträger getrennt und der Transportträger selbst wird im Normalfall im wiederaufgerollten oder zerkleinerten Zustand entsorgt. Dabei treten insbesondere Positionier- und Entnahmeprobleme bei der Handhabung der aufgeklebten Kleinteile auf, da hier durch den Transportträger keine genaue Positionierung der Kleinteile vorgegeben wird und da je nach Klebstoffmenge Schwierigkeiten bei der Entnahme der Kleinteile auftreten können.

Alternativ können Kunststoffkleinteile direkt auf Träger, wie beispielsweise Kunststoffschnüre, Metalldrähte, Kunststoffstreifen und -folien oder Metallstreifen und -folien aufgespritzt werden. Auch hier werden die Kunststoffkleinteile vor der Weiterverarbeitung vom Trägerband getrennt. Allerdings besteht bei dieser Vorgehensweise der Nachteil, daß durch die thermische Ausdehnung des Trägerstreifens beim direkten Aufspritzen nur eine begrenzte Positionierungsgenauigkeit erzielbar ist. Ferner entstehen unerwünschte Entnahmelücken auf dem Trägerstreifen.

In sämtlichen oben genannten Fällen entstehen hohe Kosten für die entsprechenden Einweg-Trägerstreifen und das hierfür vorgesehene Streifenwerkzeug, die die Gesamtkosten für das Kunststoffkleinteil in die Höhe treiben. Ferner ist die Positionier- und Teilungsgenauigkeit aufgrund der technischen Gegebenheiten unbefriedigend.

Zwar beschreibt die DE 19614742 C2 eine Vorrichtung zum aufliegenden Transport von flachen, insbesondere plattenförmigen Gegenständen, bei der erhabene ringförmige Erhebungen die Gegenstände zum Transport aufnehmen und eine Vakuumeinrichtung zum ansaugen der Gegenstände und ein zusätzliches Magnetsystem zum festhalten der Gegenstände vorgesehen ist. Diese Vorrichtung ist jedoch vornehmlich für flache, ferromagnetische Gegenstände vorgesehen. In sofern ist eine derartige Vorrichtung für schlecht sortierbare, nicht flächig ausgebildete Kunststoffbauteile ungeeignet.

Ferner beschreibt die DE 10029836 A1 eine Vorrichtung für eine Teilezuführung an einem Montageautomat. Diese Vorrichtung weist zwei Schwingförderer auf, die jeweils einen topfförmigen Aufsatz mit umfangsseitigem Teileaustrag haben. Die topfförmigen Aufsätze sind dabei mit geringem seitlichen Versatz angeordnet. An dem Teileaustrag der Schwingförderer schließen lineare Transporteinrichtungen an, die jeweils eine Führungsbahn für die zu transportierenden Teile und ein endlos über Umlenkrollen geführtes, stetig angetriebenes Transportband für die Fortbewegung der Teile aufweisen. Der Übergang der zu fördernden Teile auf die Führungsbahn der Sammelstrecke wird durch aus Düsen austretende Luftströme in Transportrichtung unterstützt. Ein Sortieren schwer sortierbarer Kleinteile zur lagegenauen Teilezuführung erfolgt dabei jedoch nicht.

Der vorliegenden Erfindung liegt daher die Aufgabe zugrunde, einen Transportträger zur lagegenauen Teilezuführung von schlecht sortierbaren Kleinteilen, insbesondere Kunststoffteilen, zur Verfügung zu stellen, der die obengenannten Nachteile des Standes der Technik vermeidet. Ferner soll ein Verfahren zur Zuführung schwer sortierbarer Kleinteile zur Verfügung gestellt werden, welches den erfindungsgemäßen Transportträger benutzt. Insbesondere soll der erfindungsgemäße Transportträger wiederverwendbar sein und dadurch entsprechende Einsparungen bei den Streifen- und Werkzeugkosten ermöglichen. Ferner soll die Bestückung des Transportträgers aus wechselbaren Formeinsätzen (mold bars) außerhalb der Spritzmaschine möglich sein, um Ausschußteile vor der Weitergabe an die Weiter verarbeitungseinrichtung aussortieren zu können.

Diese Aufgabe wird durch einen Transportträger mit den Merkmalen des Patentanspruchs 1 und ein Zuführverfahren mit den Merkmalen des Patentanspruchs 6 gelöst. Vorteilhafte Ausgestaltungen und Weiterbildungen der Erfindung werden in den Unteransprüchen beschrieben.

Insbesondere wird durch die Erfindung ein wiederverwendbarer Transportträger zur lagegenauen Teilezuführung von schlecht sortierbaren Kleinteilen geschaffen, der entsprechende Einsparungen bei dem Transportträger und den Werkzeugkosten ermöglicht. Ferner ermöglicht die vorliegende Erfindung die Bestückung des Trägerstreifens aus wechselbaren Formeinsätzen (mold bars) außerhalb der Spritzmaschine, was das Aussortieren von Ausschußteilen vor dem Weitertransport erlaubt. Da der Transportträger kalt bestückt wird, können die negativen Effekte, die durch die Wärmeausdehnung des Transportträgers bei den bekannten Bestückungsverfahren entstehen, vermieden werden. Außerdem kommt hierdurch die erhöhte Teilungsgenauigkeit der Stanztechnik bei der Festlegung der Teilepositionen zum Tragen. Es können auch sehr leicht große Teile auf dem Transportträger durch einfaches Fügen oder Pressen mechanisch befestigt und hiervon auch wieder leicht entnommen werden.

Eine vorteilhafte Ausführungsform der vorliegenden Erfindung weist die Merkmale des Patentanspruchs 2 auf. Diese Ausführungsform ermöglicht insbesondere eine lagegenaue und geordnete Zuführung der Kunststoffkleinteile in die gewünschte Montageposition an der Weiterverarbeitungseinrichtung.

Eine weitere vorteilhafte Ausführungsform der vorliegenden Erfindung sieht die Merkmale des Patentanspruchs 3 vor. Hierdurch wird die Lagerung und der Versand großer positionsgenau geordneter Mengen von Kleinteilen auf Spulen möglich.

Schließlich sieht eine weitere vorteilhafte Ausgestaltung der vorliegenden Erfindung die Merkmale des Patentanspruchs 4 vor. Dabei ist eine geeignete Anwendung der Erfindung die Zahnbürstenproduktion und dort die automatische Bestückung mit Pivoting-Tufts.

Noch eine vorteilhafte Ausgestaltung der vorliegenden Erfindung sieht die Merkmale des Patentanspruchs 5 vor. Dies ist insbesondere für schwer sortierbare Kleinteile von Bedeutung, die im Haushaltsgeräte-, Pflege- und Gesundheitsbereich zur Anwendung kommen.

Ein erfindungsgemäßes Verfahren zum Zuführen von schwer sortiebaren Kleinteilen, insbesondere Kunststoffkleinteilen, zu einer Bestückungsstation, sieht die Merkmale des Patentspruchs 6 vor. Dabei weist das Verfahren folgende Schritte auf: Vorsehen von Positionier- und Fügehilfen (4), die mit einem oder mehreren Kleinteilen (5; 6; 12) verbunden sind. Dies kann bei Spritzgußteilen beispielsweise an Angußteilen erfolgen. Befestigen der Positionier- und Fügehilfen in Aufnahme- und Fixieröffnungen eines Transportstreifens durch Fügen oder Kaltverformen. Die Funktion des Positionierens und Fixierens kann dabei in einer gemeinsamen Öffnung oder in mehreren getrennten Öffnungen erfolgen. Letzteres ist insbesondere bei größeren Bauteilen sinnvoll, da hierdurch ein unerwünschtes Klemmen, das die Entnahme der Kleinteile an der Bestückungsstation behindert, vermieden werden kann. Überführen der Kleinteile mittels Transportträger zur Bestückungsstation. Die Überführung kann beispielsweise mittels Kettenförderer erfolgen. Lagegenaue Entnahme der Kleinteile aus den Aufnahme- und Fixieröffnungen. Die Entnahme kann dabei vollautomatisch mittels Greifer erfolgen. Rückführung des Transportträgers in den Zuführkreislauf.

Eine vorteilhafte Weiterbildung des erfindungsgemäßen Verfahrens sieht die Merkmale des Patentanspruchs 7 vor. Hierdurch kann auf Vorrat produziert und Ausschußteile aussortiert werden.

Weitere Ausgestaltungen und Vorteile der Erfindung werden durch die Beschreibung der Ausführungsbeispiele unter Bezugnahme auf die beigefügten Zeichnung erläutert. Darin zeigen:
- Fig. 1: eine Draufsicht auf vorteilhafte Ausführungsformen eines erfindungsgemäßen Transportträgers;
- Fig. 2: eine geschnittene Seitenansicht entlang der Linie II - II aus Fig. 1;
- Fig. 3: eine Draufsicht auf eine Abwandlung der Ausführungsform gemäß Fig. 1 mit einer zweifach Bestückung;
- Fig. 4: eine Draufsicht auf eine weitere Abwandlung der Ausführungsform aus Fig. 1 mit einer achtfach Bestückung.

Nachfolgend werden gleiche oder ähnliche Bauteile mit gleichen Bezugszeichen gekennzeichnet.

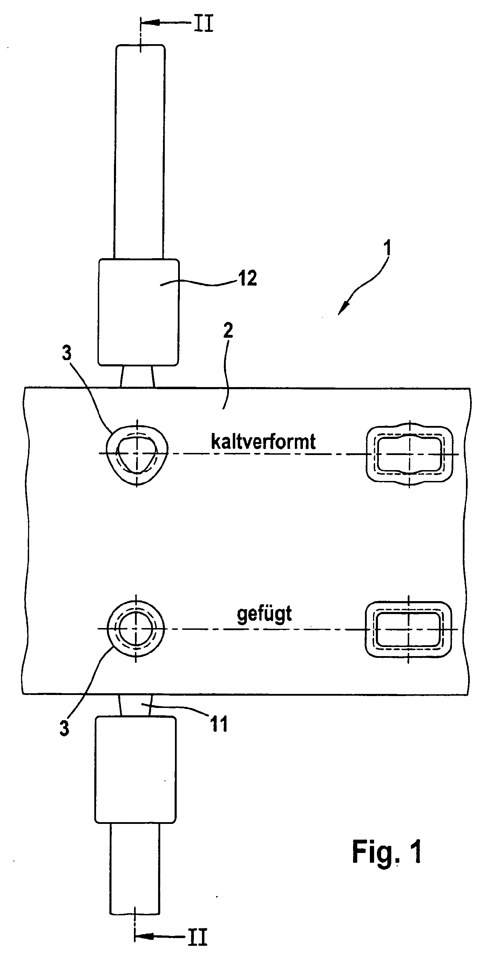

Fig. 1 zeigt eine schematische Draufsicht auf eine erste vorteilhafte Ausführungsform eines erfindungsgemäßen Transportträgers 1 in der oberen Zeichnungshälfte und eine zweite vorteilhafte Ausführungsform in der unteren Zeichnungshälfte.

Darin weist der Transportträger 1 einen Transportstreifen 2 mit einer Matrix, d. h. einem Lochmuster von Aufnahme- und Fixieröffnungen 3 auf. Der Transportstreifen 2 ist als längliches, im wesentlichen flaches rechteckiges Band ausgebildet. Der Transportstreifen 2 ist im vorliegenden Ausführungsbeispiel aus flexiblem, lebensmittelechtem Metall oder Kunststoffmaterial hergestellt. Außerdem weist der Transportstreifen 2 zusätzlich ein Verstärkungsmaterial auf, beispielsweise spezielle Fasermatten oder ähnliches, um dem Transportträger 1 ausreichende Festigkeit zu vermitteln.

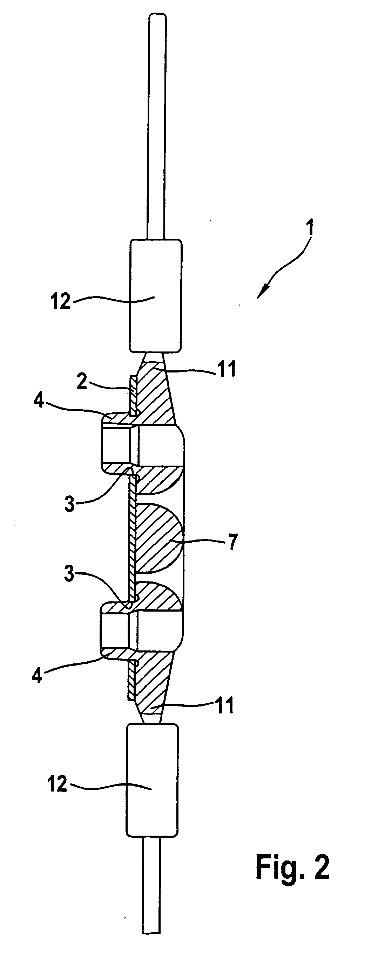

Die Matrix von Aufnahme- und Fixieröffnungen 3 ist dabei durch in Längsrichtung in regelmäßiger Abfolge angeordnete paarweise Ausstanzungen im Transportstreifen 2 gebildet. Dabei dienen die Aufnahme- und Fixieröffnungen 3 zur Aufnahme von Positionier- und Fügehilfen 4, wie in Figuren 1 und 2 gezeigt, wobei Fig. 2 eine geschnittene Seitenansicht entlang der Linie II - II aus Fig. 1 ist.

In Fig. 1 und Fig. 2 sind zu beiden Seiten des Transportstreifens 2 orthogonal hervorstehende Kunststoffkleinteile 12 erkennbar, die über Anbindungen 11 mit einem Angußteil 7 verbunden sind. Dabei werden die Spritzguß-Kunststoffteile 12 in erkaltetem Zustand auf den Transportstreifen 2 aufgebracht.

Dies erfolgt, wie in der oberen Zeichnungshälfte von Fig. 1 und Fig. 2 dargestellt, durch Kaltverformen, im vorliegenden Ausführungsbeispiel durch Verkrimpen, der leicht konischen vom Angußteil 7 hervorstehenden Positionier- und Fügehilfen 4 in der Aufnahme- und Fixieröffnung 3.

In der unteren Zeichnungshälfte von Fig. 1 und Fig. 2 sind die Positionier- und Fügehilfen 4 mit den Aufnahme- und Fixieröffnungen 3 gefügt, was durch die konische Formgebung der Positionier- und Fügehilfen 4 erleichtert wird.

Die Kunststoffkleinteile 12 weisen zu diesem Zweck an ihrem Angußteil 7 bereits entsprechende Positionier- und Fügehilfen 4 auf. Die Kleinteile 12 werden nach dem Erkalten aus einem nicht dargestellten Spritzgußautomaten direkt dem Transportträger 1 zugeführt und darauf, in eine der oben beschriebenen Weise, lösbar befestigt. Die Position der einzelnen Kunststoffkleinteile 12 wird dabei durch die Matrix der Aufnahme- und Fixieröffnungen 3 reproduzierbar vorgegeben. Anschließend wird der Transportträger 1 zur Zwischenlagerung aufgerollt oder direkt dem Weiterverarbeitungsprozeß zugeführt. Hier werden die Kunststoffkleinteile 12 entnommen und der Transportträger 1 zur erneuten Bestückung bereitgestellt.

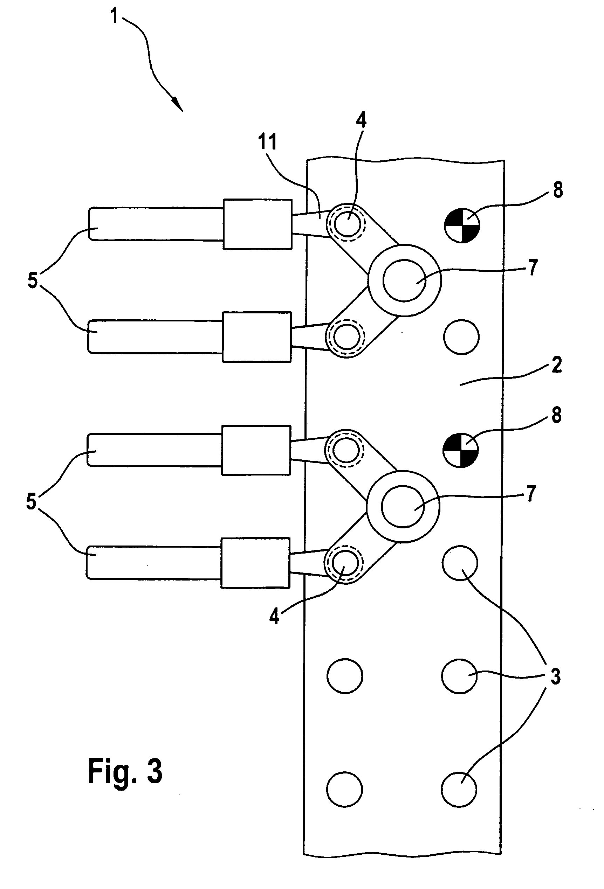

Fig. 3 zeigt eine schematische Draufsicht auf eine Abwandlung der Ausführungsform aus Fig. 1. Darin ist der Transportträger 1 mit zweifach Pivoting-Tufts (drehbaren Borstenbüscheln) 5 bestückt, die zur automatischen Bestückung eines Fertigungsautomaten bei der Zahnbürstenproduktion dienen. In der Darstellung von Fig. 3 stehen die Pivoting-Tufts 5 von einer Seite des Transportstreifens 2 hervor. Auch hier ist die Matrix der Aufnahme- und Fixieröffnungen 3 dargestellt, die der Aufnahme der am Angußteil 7 angebrachten Positionier- und Fixieröffnungen 4 dienen.

Außerdem sind auf dem Transportstreifen 2 in regelmäßigen Intervallen Streifenfixierungen 8 angeordnet, die der Fixierung des Transportstreifens 2 auf einer Förderkette oder einer Führung dienen.

Die Aufnahme- und Fixieröffnungen 3 weisen dabei genaue Abstände zueinander und genau vorgegebene Öffnungsdurchmesser auf, da hier keine thermischen Einflüsse bei der Herstellung der Matrix wirken. Die Pivoting-Tufts 5 sind im Ausführungsbeispiel gemäß Fig. 3 an den Transportstreifen 2 durch Kaltverformen der Positionier- und Fügehilfen 4, d.h. hier durch Krimpen, befestigt.

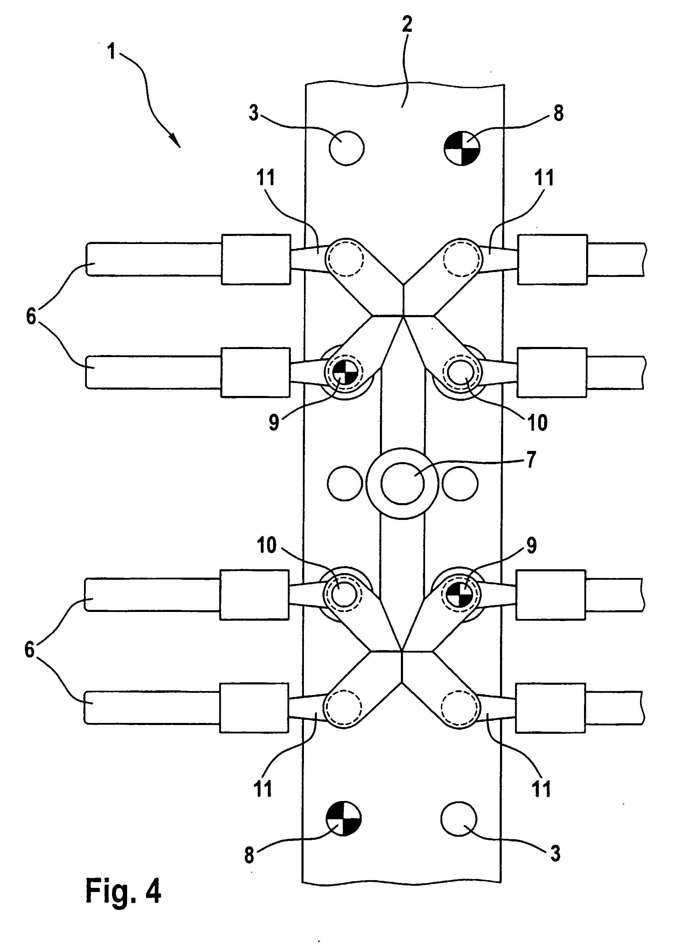

Fig. 4 zeigt noch eine weitere Abwandlung der Ausführungsformen aus Fig. 1, bei der der Transportträger 1 mit achtfach Pivoting-Tufts bestückt ist. Bei dieser Ausführungsform wird das Angußteil 7 an zwei Punkten über Befestigungen 10 an dem Transportstreifen 2 befestigt und durch zwei zusätzliche Positionierungen 9 in der vorgegebenen Lage positioniert. Somit sind die Funktionen der Aufnahme und des Fixierens im Gegensatz zu den vorhergehenden Ausführungsformen voneinander getrennt. Hierdurch wird ein unerwünschtes Verklemmen größerer Angußteile auf dem Transportträger 1 verhindert und so die leichte Entnahme vom Transportträger 1 sichergestellt.

Neben den Dargestellten Bestückungskombinationen ist aber auch jede andere geeignete Bestückungskombination möglich.

## Patentansprüche

1. Transportträger (1) zur lagegenauen Teilezuführung von schlecht sortierbaren Kleinteilen (5; 6 ; 12), insbesondere Kunststoffteilen, wobei ein flacher Transportstreifen (2) mit gestanzten Aufnahme- und Fixieröffnungen (3) zur Aufnahme von Kleinteilen (5; 6; 12) mit angeordneten Positionier- und Fügehilfen (4) vorgesehen ist,
**dadurch gekennzeichnet,**
**daß** zwischen den Positionier- und Fügehilfen (4) und den Aufnahme- und Fixieröffnungen (3) eine Fügeverbindung oder eine Verbindung durch Kaltverformung vorgesehen sind.

2. Transportträger (1) zur lagegenauen Teilezuführung nach Patentanspruch 1,
**dadurch gekennzeichnet,**
**daß** der Transportstreifen (2) Streifenfixierungen (8) aufweist.

3. Transportträger (1) zur lagegenauen Teilezuführung nach Patentanspruch 1 oder 2,
**dadurch gekennzeichnet,**
**daß** der Transportträger (1) auf eine Rolle aufwickelbar ist.

4. Transportträger (1) zur lagegenauen Teilezuführung nach einem der voranstehenden Patentansprüche,
**dadurch gekennzeichnet,**
**daß** als Kleinteile Pivoting-Tufts (5;6) für die Zahnbürstenherstellung vorgesehen sind.

5. Transportträger (1) zur lagegenauen Teilezuführung nach einem der voranstehenden Patentansprüche,
**dadurch gekennzeichnet,**
**daß** der Transportstreifen (2) aus lebensmittelechtem Kunststoffmaterial oder Metall hergestellt ist.

6. Verfahren zum Zuführen von schwer sortierbaren Kleinteilen, insbesondere Kunststoffkleinteilen, zu einer Bestückungsstation, wobei das Verfahren folgende Schritte aufweist:
Vorsehen von Positionier- und Fügehilfen (4), die mit einem oder mehreren Kleinteilen (5; 6; 12) verbunden sind;
Verankern der Positionier- und Fügehilfen (4) in Aufnahme und Fixieröffnungen (3) eines Transportstreifens (2) durch Fügen oder Kaltverformen;
Überführen der Kleinteile (5; 6; 12) mittels Transportträger (1) zur Bestückungsstation;
Lagegenaue Entnahme der Kleinteile (5; 6; 12) aus den Aufnahme- und Fixieröffnungen (3); und
Rückführung des Transportträgers (1) in den Zuführkreislauf.

7. Verfahren zum Zuführen von schwer sortierbaren Kleinteilen nach Patentanspruch 6, wobei der Transportträger (1) in einem Zwischenschritt zum Zwischenlagern der Kunststoffkleinteile (5; 6; 12) aufgerollt wird.

## Claims

1. Transporting carrier (1) for the precisely positioned supply of difficult-to-sort small parts (5; 6; 12), in particular plastic parts, a flat transporting strip (2) with punched accommodating and fixing openings (3) being provided for accommodating small parts (5; 6; 12) with positioning and joining aids (4) arranged thereon, **characterized in that** a joining-type connection or a cold-forming connection is provided between the positioning and joining aids (4) and the accommodating and fixing openings (3).

2. Transporting carrier (1) for the precisely positioned supply of parts according to Patent Claim 1, **characterized in that** the transporting strip (2) has strip fixing means (8).

3. Transporting carrier (1) for the precisely positioned supply of parts according to Patent Claim 1 or 2, **characterized in that** the transporting carrier (1) can be rolled up on a roll.

4. Transporting carrier (1) for the precisely positioned supply of parts according to one of the preceding patent claims, **characterized in that** the small parts provided are pivoting tufts (5; 6) for toothbrush production.

5. Transporting carrier (1) for the precisely positioned supply of parts according to one of the preceding patent claims, **characterized in that** the transporting strip (2) is produced from plastic material which is suitable for food-contact applications or from metal.

6. Method of supplying difficult-to-sort small parts, in particular small plastic parts, to a fitting station, the method having the following steps:
providing positioning and joining aids (4), which are connected to one or more small parts (5; 6; 12);
anchoring the positioning and joining aids (4) in accommodating and fixing openings (3) of a transporting strip (2) by joining or cold forming;
transferring the small parts (5; 6; 12) to the fitting station by means of transporting carriers (1);
removing the small parts (5; 6; 12) in a precisely positioned manner from the accommodating and fixing openings (3); and
returning the transporting carrier (1) into the supply circuit.

7. Method of supplying difficult-to-sort small parts according to Patent Claim 6, in which the transporting carrier (1), in an intermediate step, is rolled up for the interim storage of the small plastic parts (5; 6; 12).

## Revendications

1. Transporteur (1) pour amener en position précise de petites pièces (5; 6; 12) difficiles à trier, en particulier des pièces en matière synthétique, une bande plane de transport (2) qui présente des ouvertures estampées de reprise et de fixation (3) pour reprendre les petites pièces (5; 6; 12) et sur lesquelles sont disposées des accessoires de positionnement et de jonction (4) étant prévue, **caractérisé en ce qu'**une liaison jointive ou une liaison par déformation à froid sont prévues entre les accessoires de positionnement et de jonction (4) et les ouvertures de reprise et de fixation (3).

2. Transporteur (1) pour le guidage de pièces en position précise selon la revendication 1, **caractérisé en ce que** la bande transporteuse (2) présente des fixations (8) de bande.

3. Transporteur (1) pour le guidage de pièces en position précise selon la revendication 1 ou 2, **caractérisé en ce que** le transporteur (1) peut être enroulé sur un rouleau.

4. Transporteur (1) pour le guidage de pièces en position précise selon l'une des revendications précédentes, **caractérisé en ce que** les petites pièces sont des touffes pivotantes (5; 6) destinées à la fabrication de brosses à dents.

5. Transporteur (1) pour le guidage de pièces en position précise selon l'une des revendications précédentes, **caractérisé en ce que** la bande transporteuse (2) est réalisée en une matière synthétique ou un métal acceptable pour les produits alimentaires.

6. Procédé pour amener à un poste de montage de petites pièces difficiles à trier, en particulier de petites pièces en matière synthétique, le procédé comprenant les étapes suivantes :
prévoir des accessoires de positionnement et de jonction (4) qui sont reliés à une ou plusieurs petites pièces (5; 6; 12),
ancrer les accessoires de positionnement et de jonction (4) dans des ouvertures de réception et de fixation (3) d'une bande transporteuse (2), par jonction ou déformation à froid,
au moyen du transporteur (1), transférer les petites pièces (5; 6; 12) vers le poste de montage,
prélever en position précise les petites pièces (5; 6; 12) des ouvertures de réception et de fixation (3) et
ramener le transporteur (1) dans le circuit d'amenée.

7. Procédé pour amener de petites pièces difficiles à trier selon la revendication 6, dans lequel le transporteur (1) est enroulé dans une étape intermédiaire d'entreposage provisoire des petites pièces (5; 6; 12) en matière synthétique.
